# EUROPÄISCHE PATENTSCHRIFT

(11) **EP 1 979 075 B1**
(45) Veröffentlichungstag und Bekanntmachung des Hinweises auf die Patenterteilung: **14.03.2012**
(21) Anmeldenummer: 06829398.4
(22) Anmeldetag: 07.12.2006
(51) Int. Cl.: B01D 53/92

(54) **ADSORBEREINHEIT FÜR FLÜCHTIGE KOHLENWASSERSTOFFE, WELCHE EIN ADSORBERMATERIAL AUS EINEM EISEN ENTHALTENDEM MOLEKULARSIEB AUFWEIST**
ADSORBER UNIT FOR VOLATILE HYDROCARBONS COMPRISING AN ADSORBER MATERIAL MADE FROM AN IRON-CONTAINING MOLECULAR SIEVE
UNITÉ ADSORBANTE DESTINÉE À DES HYDROCARBURES VOLATILES ET CONTENANT UN MATÉRIAU ADSORBANT CONSTITUÉ D'UN TAMIS MOLÉCULAIRE FERREUX

(30) Priorität: 22.12.2005 DE 102005061713
(43) Veröffentlichungstag der Anmeldung: 15.10.2008
(73) Patentinhaber: SÜD-CHEMIE AG, 80333 München (DE)
(72) Erfinder: TISSLER, Arno, 93105 Tegernheim (DE); ALTHOFF, Roderick, 83024 Rosenheim (DE); KURTH, Volker, 83043 Bad Aibling (DE)
(74) Vertreter: Stolmár, Matthias
(86) Internationale Anmeldenummer: PCT/EP2006/011783
(87) Internationale Veröffentlichungsnummer: WO 2007/079852

(56) Entgegenhaltungen:
- EP-A- 1 297 885
- EP-A1- 0 955 080
- EP-A1- 1 147 801
- WO-A-01/43854
- JP-A- 2000 167 390
- CH. BAERLOCHER, W.M. MEIER AND D.H. OLSON: "Atlas of Zeolite Framework Types" [Online] 2001, ELSEVIER , XP002425913 ISBN: 0-444-50701-9 Gefunden im Internet: URL:http://zeolites.ethz.ch/IZA-SC/Atlas_p df/MFI.pdf> MFI Data Sheet

## Beschreibung

Die vorliegende Erfindung betrifft eine Adsorbereinheit für flüchtige Kohlenwasserstoffe, die ein Adsorbermaterial enthält, das im Wesentlichen aus einem Eisen-enthaltenden Molekularsieb besteht.

Kaltstart-Kohlenwasserstoffemissionen sind derzeit für ungefähr 80% von durch Verbrennungsmotoren emittierten Kohlenwasserstoffen verantwortlich. Zahlreiche Verfahren wurden schon vorgeschlagen, um diese Emissionen zu reduzieren. Die Verfahren umfassen die Verwendung von Materialien, um die Kohlenwasserstoffe zu adsorbieren, wenn die Katalysatoren, mit denen die Kraftfahrzeuge bestückt sind, kalt und inaktiv sind und anschließend diese Kohlenwasserstoffe wieder bei höheren Temperaturen freizusetzen, wenn der Katalysator eine ausreichende Betriebstemperatur erreicht hat, so dass er die Kohlenwasserstoffe in nicht umweltschädliche Produkte umsetzen kann. Die bislang erfolgversprechendsten Adsorbermaterialien sind Molekularsiebe, insbesondere Zeolithe.

Es ist bekannt, dass Zeolithe dazu verwendet werden können, die Kohlenwasserstoffemissionen beim Kaltstart zu reduzieren, beispielsweise durch die Mechanismen, wie sie in der US 2004/0094035A1 beschrieben sind.

Molekularsiebe, insbesondere Zeolithmaterialien sind kristalline, anorganische Oxidmaterialien, die typischerweise aus Silizium und Aluminium in atomaren Verhältnissen von 1:1 bis 500:1 bestehen. Diese Materialien sind hervorragende Adsorbenzien bei der Reinigung von Abgasen, da sie typischerweise unter den thermischen Bedingungen, die in diesen Anwendungen herrschen, stabil sind. Daher wurde schon eine Vielzahl verschiedener Zeolithtypen für derartige Anwendungen untersucht, insbesondere im Hinblick auf die Stabilität gegenüber Wasser, da Zeolithe je nach Si/Al Verhältnis auch sehr gute Wasser-Adsorbenzien sind.

Higashiyama et al. (SAE Papers 2003-01-0815, Seite 45 bis Seite 51) schlagen zur Erhöhung der Desorptionstemperatur von adsorbiertem Kohlenwasserstoffen vor, dass ein Zeolith mit einer Silberlösung imprägniert wird und anschließend als Adsorbermaterial in einer Kaltstartfalle für einen 3-Wege-Katalysator eingesetzt wird. In dieser Studie wurden elf Metalle als Promoter für Zeolithe getestet, und es wurde gefunden, dass mit Ausnahme von Silber alle anderen untersuchten Metalle wie Cer, Palladium, Platin und Rhodium schlechtere Ergebnisse, d. h. niedrigere Temperaturen in Bezug auf die Temperatur der Kohlenwasserstoffdesorption ergeben.

Ausschließlich bei silberdotierten Zeolithen wurde gefunden, dass die Temperatur im Bereich von knapp über 250°C liegt. Die Adsorption hängt zwar im Allgemeinen von der Art des zu adsorbierenden Kohlenwasserstoffes ab, jedoch wiesen nur Silberdotierte Zeolithe für sämtliche betrachteten Kohlenwasserstoffe (aromatische wie nicht-aromatische) geeignet hohe Desorptionstemperaturen auf.

Weiter wurde gefunden, dass die Art des Zeoliths die Desorptionstemperatur beeinflusst. Eine Vielzahl von Zeolithen für Kohlenwasserstoffadsorbereinheiten sind in der US 2004/0226440A1 beschrieben, wobei dort der Zeolith vor Einsatz einer Dampfbehandlung bei einer Temperatur von 350-900°C unterzogen wird, um insbesondere eine bessere Wasserdampfbeständigkeit hervorzurufen. Die Desorption von aromatischen Kohlenwasserstoffen aus ZSM5-Typ Zeolithen wurde von otremba und Zaydel in "Reaction Kinetics Analysis Letters, Vol. 51, No. 2473-9 (1993)" im Detail beschrieben und es wurde festgestellt, dass die Adsorption von aromatischen Kohlenwasserstoffen, insbesondere an den Brönstedt-sauren Stellen stattfindet.

EP 1297885 A beschreibt einen Oxidationskatalysator, der einen mit Fe und Ag beladenen Zeolithen umfasst.

JP 2000167390A betrifft ein Adsorptionsmittel für Kohlenwasserstoffe in Kraftfahrzeugabgasen.

WO 01/43854A offenbart eine Zusammensetzung zur Verminderung flüchtiger organischer Verbindungen, die ein Adsorptionsmittel umfasst, bei dem es sich um einen Ag enthaltenden Zeolithen handeln kann.

EP 0955080 A1 betrifft zeolithische Katalysatoren, die mindestens eine metallische katalytisch aktive Komponente enthalten.

EP 1147801 A1 offenbart ein Verfahren und einen Katalysator zur selektiven Reduktion von Stickoxiden.

Das der Erfindung zugrunde liegende Problem bestand daher darin, eine Adsorbereinheit enthaltend geeignete Adsorbermaterialien für die Adsorption von Kohlenwasserstoffen bereitzustellen, die eine Desorption der adsorbierten Kohlenwasserstoffe erst bei gegenüber aus dem Stand der Technik erhöhten Temperaturen zulassen. Bei nicht aromatischen. Kohlenwasserstoffen, bei deren oft n-Decan als Referenz verwendet wird bezeichnet der Begriff "erhöhte Temperatur" eine Temperatur von höher als mindestens 200°C, bevorzugt höher als 250°C; bei aromatischen Kohlenwaesertoffen wie Benzol, Toluol, Xylol etc. sind dies Temperaturen von mehr als 300°C, bevorzugt von mehr als 350°C. Damit kann die vorstehend beschriebene Problematik des Kaltstarts von Verbrennungsmotoren im Hinblick auf die Emission von schädlichen Kohlenwasserstoffen in die Umwelt vermieden werden.

Dieses Problem wird gelöst durch die Bereitstellung einer Adsorbereinheit für flüchtige Kohlenwasserstoffe zur Kontrolle der Emission flüchtiger Kohlenwasserstoffe nach Anspruch 1, umfassend ein Kohlenwasserstoffadsorbermaterial, welches ein Eisen-enthaltendes Molekularsieb ist und weiter Silber als ein Metall in Oxidationszustand +1 umfasst. Die Beschreibung des Grundprinzips einer Adsorbereinheit kann z.B. der US 2004/0094035 A1 entnommen werden.

Überraschenderweise wurde gefunden, dass die Dotierung von Molekularsieben mit Eisen dazu führt, dass die Desorptionstemperatur von adsorbierten Kohlenwasserstoffen, und zwar sowohl

von aromatischen wie auch nichtaromatischen Kohlenwasserstoffen, je nach Kohlenwasserstoff um ca. 60-100°C höher liegt als diejenige der besten Katalysatoren, die aus dem Stand der Technik bekannt sind und die beispielsweise aus mit Silber dotieren Zeolithen bestehen. Dies trifft auch zu, wenn die aus dem Stand der Technik bekannten Silber-dotierten Zeolithe zusätzlich mit Eisen promotiert werden.

Die erfindungsgemäße Adsorbereinheit weist somit eine besonders große Effizienz und eine verminderte Emission von Kohlenwasserstoffen in die Umwelt auf, da bei der erhöhten Desorptionstemperatur, bei der die Kohlenwasserstoffe an der erfindungsgemäßen Adsorbereinheit desorbiert: werden, eine weitgehend vollständige Umsetzung der desorbierten Kohlenwasserstoffe am zumeist edelmetallhaltigen eigentlichen Katalysator erfolgt.

Es ist insbesondere bevorzugt, dass das Molekularsieb ein Molekularsieb auf Siliziumdioxid/Aluminiumdioxid/Eisenbasis ist, wobei das Verhältnis von SiO₂/Al₂O₃ 10:1 bis 100:1 beträgt. Dieser Wertebereich des Verhältnisses von SiO₂/Al₂O₃ gewährleistet, dass die Brönstedtsäurestärke und die Anzahl der Brönstedtsäurezentren in dem Molekularsieb hoch genug ist, um eine effiziente Adsorption von Kohlenwasserstoffen (aromatisch wie nicht-aromatisch) zu ermöglichen.

Besonders bevorzugt ist das Molekularsieb ein Zeolith, der ausgewählt ist aus Zeolithen vom ZSM-5-Typ (MFI), Zeolith Y (FAU), Zeolith BETA (BEA), Chabazit (CHA), Mordenit (MOR) und Erionit (ERI), ZSM-11 (MEL), ZSM-12 (MTW), ZSM-23 (MTT). Besonders bevorzugt sind Zeolithe vom ZSM-5-Typ oder BETA-Zeolithe, die eine Ringöffnung aufweisen, die aus 8, 10 oder 12 Tetraedern aufgebaut ist. Siliziumreiche Zeolithe, die hydrophob, d. h. organophil sind und für den erfindungsgemäßen Zweck geeignet sind, weisen ein Si/Al Verhältnis von >5 auf. ZSM-5-Typ-Zeolithe mit besonders hohem Siliziumdioxidgehalt werden auch als Silicalite bezeichnet (US 4,297,328), die im Rahmen der vorliegenden Erfindung ebenfalls verwendet werden können.

Es wurde überraschenderweise gefunden, dass eine Zugabe von Silber als ein weiteres Metall im Oxidationszustand +1 die Desorptiontemperatur für aromatische als auch nicht-aromatische Kohlenwasserstoffe noch um circa 50°C hin zu höheren Temperaturen verschiebt.

In besonders bevorzugten Ausführungsformen ist der Gehalt an Eisen 0,1 bis 10 Gew.-%, bezogen auf das Gesamtgewicht des Adsorbermaterials. In einer besonders bevorzugten Ausführungsform 1-3 Gew.-%. Das Eisen ist eingebracht durch Festkörperionenaustausch, wie sie beispielsweise im US 6, 887, 815B2 oder im EP 0955080B1 beschrieben sind.

Die Menge an Metall im Oxidationszustand +1, d.h. des Silbers, beträgt 0,1 bis 2 Gew.-%, bevorzugt 0,1 bis 1,5 Gew.-% bezogen auf das Gesamtgewicht des Zeolithen. Die Kombination aus der erfindungsgemäßen Menge an Eisen mit der erfindungsgemäßen Menge an Metall im Oxidationszustand +1 führt dazu, dass in ganz bevorzugten Ausführungsformen der Erfindung die Desorptionstemperaturen für adsorbierte Kohlenwasserstoffe teilweise um bis zum 60-100°C höher liegen, als bei Kaltstartfallen bzw. Adsorptionsmaterialien für Kohlenwasserstoffe aus dem Stand der Technik. Der untere Wert für die Erhöhung des vorgenannten Desorptions-Temperaturbereichs betrifft dabei bevorzugt nicht-aromatische, also aliphatische Kohlenwasserstoffe, der obere Wert olefinische und aromatische Kohlenwasserstoffe.

In einem weiteren Aspekt stellt die vorliegende Erfindung ein Verfahren zur Herstellung eines Zeolithen zur Verwendung in einer erfindungsgemäßen Adsorbereinheit zur Verfügung, wobei
a) eine trockene Mischung aus Ammoniumsalzen oder N-haltigen Verbindungen, NH₃/NH₄-Zeolithen und einer Eisenverbindung sowie einer Verbindung von Silber als ein einwertiges Metall hergestellt wird,
b) die vorstehenden Komponenten in einer Mühle intensiv vermischt und
c) bei einer Temperatur von mindestens 300°C getempert werden und
d) abschließend eine Abkühlung auf Raumtemperatur erfolgt.

Die erfindungsgemäße Festkörperionenaustausch erlaubt die exakte Positionierung der Eisen- bzw. der Ionen des einwertigen Metalls an den Brönstedt-sauren inneren Gitterplätzen des Zeolithen, während das Aufbringen von Eisen aus wässriger Phase insbesondere auch zur Ausfüllung von kolloidalem Eisenhydroxid führt, welches hauptsächlich auf der äußeren Oberfläche des Molekularsiebs abgelagert wird und damit für die Zwecke der vorliegenden Erfindung nicht brauchbar ist, da eine Adsorption von Kohlenwassertoffen im Innern des Zeolithen an den Brönstedtsäurezentren erfolgt.

Bevorzugt ist, dass das Zeolithmaterial vom ZSM-5 (MFI) oder BETA-Typ (BEA) ist, die insbesondere auch jeweils in der Ammoniumform verwendet werden können. Für die Eisenionenaustauschreaktion ist die Ammoniumform ganz besonders bevorzugt. Die Festkörperionentauschreaktion und deren Ausbeute wird durch die Verwendung einer stickstoffhaltigen Atmosphäre während der Temperung positiv beeinflusst. Es ist ebenfalls bevorzugt, wenn die stickstoffhaltige Atmosphäre weiter ammoniumhaltig oder aminhaltig ist, was die Ausbeute der Festkörperionentauschreaktion weiter steigert. In weiter bevorzugten Ausführungsformen kann die Festkörperionentauschreaktion auch unter Überdruck erfolgen.

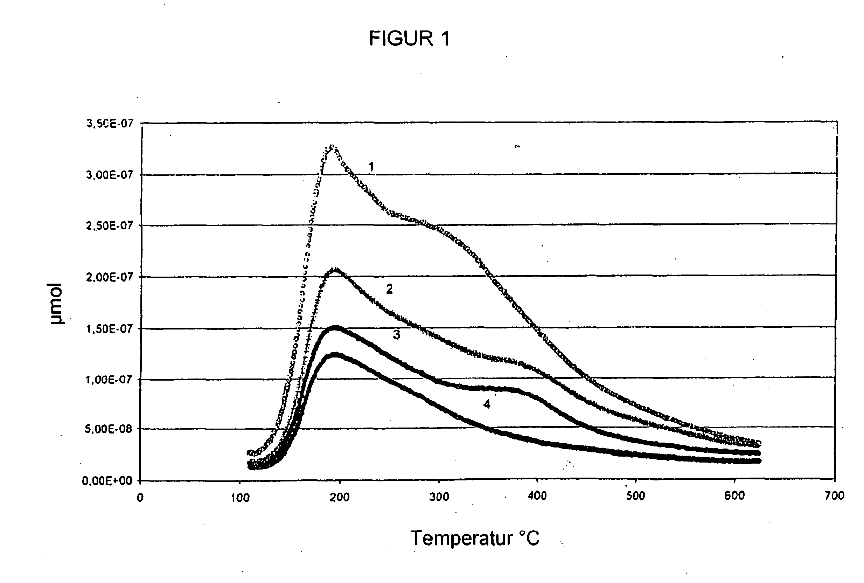

Die Erfindung ist weiter anhand der nachfolgenden Figur erläutert. Es zeigt
Figur 1: ein Schaubild, bei dem die Desorptionstemperaturen (als Säurestärke gemessen in µmol als Funktion der Temperatur) von Kohlenwasserstoffen eines eisendotierten Zeolithen (Fe-BEA25) mit Silberzusatz und diejenige eines undotierten Zeolithen (H-BEA25) aufgetragen sind.

Die Messungen wurden mittels Ammonium-Temperatur-Programmierte-Desorption (TPD) durchgeführt. Die erhaltenen Werte korrelieren mit den Werten für die Desorptionstemperatur von Kohlenwasserstoffen. Jede Kurve weist dabei typischerweise 2 Signale (Maxima) auf, von denen das Integral über dem ersten Signal (Maximum) ein Maß für die Anzahl der schwach (Lewis)sauren Zentren im Zeolith ist, die jedoch die adsorbierten Kohlenwasserstoffe bei relativ niedrigen Temperaturen freisetzen. Das zweite Signal (Maximum) ist ein Maß für die Anzahl und die Desorptionstemperatur der Brönstedt-sauren Zentren, von denen die Kohlenwasserstoffe bei den gewünschten hohen Temperaturen desorbieren.

Kurve 1 zeigt den Verlauf der Desorption für frisch kalzinierten H-BEA25 Zeolith. Die Desorption von Kohlenwasserstoffen findet in einem Temperaturbereich von ca. 290-310°C statt. Nach künstlicher Alterung (800°C für 24h), wie es realen Bedingungen für eine Adsorbereinheit z.B in einem 3-Wege-Katalysator in einem Kraftfahrzeug entspricht, ist aus Kurve 4 ersichtlich, dass fast keine Adsorption und damit auch Desorption mehr stattfindet: Das erste Maximum ist um den Faktor 3 kleiner als das erste Maximum in Kurve 1 und das zweite Maximum ist in Kurve 4 nahezu vollständig verschwunden.

Der eisenhaltige Zeolith (5,5 Gew% Fe₂O₃ bezogen auf den gesamten Zeolithen) mit Silberzusatz (1,5 Gew%) Fe-BEA25 weist zwar im frisch kalzinierten Zustand (Kurve 2) verglichen mit frisch kalziniertem H-BEA 25 eine geringere Anzahl schwach saurer Lewiszentren auf. Die an den starken Brönstedt-Säurezentren adsorbierten Kohlenwasserstoffe desorbieren jedoch erst im Bereich von ca. 350-410°C. Auch eine Alterung der Fe-BEA25 Zeolithe (Kurve 3) führt im Gegensatz zu gealtertem H-BEA25(Kurve 4) zu keiner nennenswerten Verminderung der Adsorptionsfähigkeit wie auch des Desorptionstemperaturbereiches. Damit ermöglicht die Verwendung eines eisenhaltigen Zeolithen in einer Adsorbereinheit sowohl eine Verschiebung der Desorption von Kohlenwasserstoffen hin zu höheren Temperaturen, wie auch eine erhöhte Langzeitstabilität verglichen mit nicht mit Eisen dotierten Zeolithen.

## Patentansprüche

1. Adsorbereinheit für flüchtige Kohlenwasserstoffe zur Kontrolle der Emission flüchtiger Kohlenwasserstoffe umfassend ein Kohlenwasserstoff-Adsorbermaterial, wobei das Adsorbermaterial ein Eisen-enthaltendes Molekularsieb ist und ein Metall im Oxidationszustand +1 umfasst, **dadurch gekennzeichnet, dass** das Eisen durch Festkörperionenaustausch eingebracht ist, der Gehalt an Eisen, bezogen auf das Gesamtgewicht des Adsorbermaterials, 0,1 bis 10 Gew.-% beträgt, und der Anteil an dem Metall im Oxidationszustand +1 im Molekularsieb 0,01-2 Gew.-% bezogen auf das Gesamtgewicht des Molekularsiebs beträgt, wobei das Metall im Oxidationszustand +1 Silber ist.

2. Adsorbereinheit nach Anspruch 1, wobei das Molekularsieb ein Molekularsieb auf Siliziumdioxid/Aluminiumdioxid/Eisen-Basis ist, das ein Verhältnis von SiO₂/Al₂O₃ von 10:1 bis 100:1 aufweist.

3. Adsorbereinheit nach Anspruch 2, **dadurch gekennzeichnet, dass** das Molekularsieb ein Zeolith ist, der ausgewählt ist aus Zeolithen vom ZSM-5-Typ (MFI), Zeolith Y (FAU), Zeolith BETA (BEA), Chabazit (CHA), Mordenit (MOR), Erionit (ERI), ZSM-11 (MEL), ZSM-12 (MTW), ZSM-23 (MTT).

4. Adsorbereinheit nach Anspruch 3, wobei der Zeolith ein Zeolith vom ZSM-5-Typ (MFI) ist oder ein BETA-Zeolith (BEA).

5. Adsorbereinheit nach Anspruch 3 oder 4, wobei die Zeolithe eine Ringöffnung aufweisen, die aus 8, 10 oder 12 Tetraedern aufgebaut ist.

6. Adsorbereinheit nach einem der voranstehenden Ansprüche, wobei der Gehalt an Eisen, bezogen auf das Gesamtgewicht des Adsorbermaterials, 1-3 Gew.-% beträgt.

7. Verfahren zur Herstellung eines Zeolithen zur Verwendung in einer Adsorbereinheit nach einem der voranstehenden Ansprüche, wobei
a) eine trockene Mischung aus Ammoniumsalzen oder N-haltigen Verbindungen, NH₃/NH₄-Zeolithen und einer Eisenverbindung sowie einer Verbindung von Silber als ein einwertiges Metall hergestellt wird,
b) die vorstehenden Komponenten in einer Mühle innig vermischt und
c) bei einer Temperatur von mindestens 300°C getempert werden, und
d) abschließend eine Abkühlung auf Raumtemperatur erfolgt.

8. Verfahren nach Anspruch 7, wobei als Zeolithmaterial ein Zeolith vom ZSM-5-Typ, vom MFI-Typ oder vom BETA-Typ jeweils in der Ammoniumform verwendet wird.

9. Verfahren nach Anspruch 8, wobei die Mischung während der Temperung einer Stickstoff-haltigen Atmosphäre ausgesetzt wird.

10. Verfahren nach Anspruch 9, wobei die Stickstoffhaltige Atmosphäre weiter Ammoniak-haltig oder Amin-haltig ist.

11. Modifizierter Zeolith erhältlich durch ein Verfahren nach einem der voranstehenden Ansprüche 7-10.

## Claims

1. Adsorber unit for volatile hydrocarbons for controlling the emission of volatile hydrocarbons, comprising a hydrocarbon adsorber material, wherein the adsorber material is an iron-containing molecular sieve and comprises a metal in the oxidation state +1, **characterized in that** the iron is incorporated by solid-state ion exchange, the iron content is 0.1 to 10 wt.-% relative to the total weight of the adsorber material, and the proportion of the metal in the oxidation state +1 in the molecular sieve is 0.01-2 wt.-% relative to the total weight of the molecular sieve, wherein the metal in the oxidation state +1 is silver.

2. Adsorber unit according to claim 1, wherein the molecular sieve is a molecular sieve based on silicon dioxide/aluminium dioxide/iron, which has a ratio of SiO₂/Al₂O₃ of from 10:1 to 100:1.

3. Adsorber unit according to claim 2, **characterized in that** the molecular sieve is a zeolite which is selected from ZSM-5 (MFI), zeolite Y (FAU), BETA zeolite (BEA), chabazite (CHA), mordenite (MOR), erionite (ERI), ZSM-11 (MEL), ZSM-12 (MTW), ZSM-23 (MTT) type zeolites.

4. Adsorber unit according to claim 3, wherein the zeolite is a ZSM-5 (MFI) or BETA zeolite (BEA) type zeolite.

5. Adsorber unit according to claim 3 or 4, wherein the zeolites have a ring opening which is formed from 8, 10 or 12 tetrahedra.

6. Adsorber unit according to one of the previous claims, wherein the iron content is 1-3 wt.-% relative to the total weight of the adsorber material.

7. Method of producing a zeolite for use in an adsorber unit according to one of the previous claims, wherein
a) a dry mixture of ammonium salts or N-containing compounds, NH₃/NH₄ zeolites and an iron compound as well as a compound of silver as a monovalent metal is produced,
b) the above components are thoroughly mixed in a mill and
c) tempered at a temperature of at least 300°C, and
d) a cooling to room temperature is then carried out.

8. Method according to claim 7, wherein a ZSM-5, MFI or BETA type zeolite, in each case in ammonium form, is used as zeolite material.

9. Method according to claim 8, wherein the mixture is exposed to a nitrogen-containing atmosphere during the tempering.

10. Method according to claim 9, wherein the nitrogen-containing atmosphere further contains ammonia or amine.

11. Modified zeolite that can be obtained by a method according to one of the previous claims 7-10.

## Revendications

1. Dispositif d'adsorption pour les hydrocarbures volatils destiné au contrôle de l'émission d'hydrocarbures volatils, comportant un matériau adsorbant les hydrocarbures, le matériau adsorbant étant un tamis moléculaire contenant du fer et comprenant un métal à l'état d'oxydation +1, **caractérisé en ce que** le fer est apporté par échange d'ions dans l'état solide, la teneur en fer par rapport au poids total du matériau adsorbant est de 0,1 à 10% en poids, et la fraction du métal à l'état d'oxydation +1 dans le tamis moléculaire est de 0,01 à 2 % en poids par rapport au poids total du tamis moléculaire, où le métal à l'état d'oxydation +1 est l'argent.

2. Dispositif d'adsorption selon la revendication 1, dans lequel le tamis moléculaire est un tamis moléculaire à base de dioxyde de silicium / dioxyde d'aluminium / fer avec un taux SiO₂/Al₂O₃ de 10:1 à 100:1.

3. Dispositif d'adsorption selon la revendication 2, dans lequel le tamis moléculaire est une zéolithe sélectionnée parmi les zéolithes de type ZSM-5 (MFI), zéolithe Y (FAU), zéolithe BETA (BEA), chabazite (CHA), mordenite (MOR), érionite (ERI), ZSM-11 (MEL), ZSM-12 (MTW) et ZSM-23 (MTT).

4. Dispositif d'adsorption selon la revendication 3, dans lequel la zéolithe est une zéolithe de type ZSM-5 (MFI) ou une zéolithe BETA (BEA).

5. Dispositif d'adsorption selon l'une des revendications 3 ou 4, dans lequel les zéolithes ont une ouverture annulaire constituée de 8, 10 ou 12 tétraèdres.

6. Dispositif d'adsorption selon l'une quelconque des revendications précédentes, dans lequel la teneur en fer par rapport au poids total du matériau adsorbant est de 1 à 3% en poids.

7. Procédé de fabrication d'une zéolithe utilisable dans un dispositif d'adsorption, selon l'une des revendications précédentes, dans lequel :
a) on prépare un mélange sec à partir de sels d'ammonium ou de composés azotés, de zéolithes à NH₃/NH₄ et un composé de fer ainsi qu'un composé d'argent comme métal monovalent, et
b) les composants ci-dessus sont intimement mélangés dans un moulin, et
c) recuits à une température d'au moins 300°C, et
d) pour finir, on laisse l'ensemble refroidir à la température ambiante.

8. Procédé selon la revendication 7, dans lequel on utilise comme matériau de zéolithe une zéolithe de type ZSM, de type MFI ou de type BETA, respectivement, sous forme d'ammonium.

9. Procédé selon la revendication 8, dans lequel le mélange est placé pendant le recuit dans une atmosphère azotée.

10. Procédé selon la revendication 9, dans lequel l'atmosphère azotée contient aussi de l'ammoniac ou des amines.

11. Zéolithe modifiée obtenue par un procédé selon l'une quelconque des revendications 7 à 10.
